# EUROPEAN PATENT APPLICATION

(11) **EP 1 304 887 A1**
(43) Date of publication of application: **23.04.2003**
(21) Application number: 01954343.8
(22) Date of filing: 26.07.2001
(51) Int. Cl.: H04N 17/00, H04N 7/173, H04N 5/00, H04B 7/26, H04H 9/00

(54) **SYSTEM FOR CALCULATING AUDIENCE RATING AND MOBILE COMMUNICATION TERMINAL**

(30) Priority: 26.07.2000 JP 2000225729
(71) Applicant: NTT DoCoMo, Inc., Tokyo 100-6150 (JP)
(72) Inventor: NAGAOKA, Tatsuji, Sapporo-shi, Hokkaido 002-8072 (JP); WAKAIZUMI, Mariko, Setagaya-ku, Tokyo 157-0062 (JP)
(74) Representative: HOFFMANN - EITLE
(86) International application number: JP0106427
(87) International publication number: WO02009447

(57) **Abstract**

The system of the present invention includes a set-top box 50 that provides programs broadcasted from a broadcast station 40 to users, a monitor 60, and mobile stations 10a through 10c accommodated in a mobile data communication network 20 and store mobile station IDs (identification information) for identifying a user. The mobile stations 10a through 10c transmit control signals including the mobile station IDs for the set-top box 50 to the set-top box 50. The set-top box 50 stores the mobile station IDs and viewing histories of the user and transmits the mobile station IDs and the viewing histories to an audience rating calculating server 70. The audience rating calculating server 70 generates user's attribute-specific audience rating data on the basis of the mobile station IDs and the viewing histories received.

## Description

### Technical Field

The present invention relates to an audience rating calculating system which calculates an audience rating of a television program, and a mobile communication terminal.

### Background Art

Conventionally, an audience rating of a television program refers to a household-specific audience rating that indicates the proportion of households which view the television program, out of all households. Household-specific audience rating is calculated by introducing devices for monitoring viewing state, each of which is attached to a television receiver and a center which summarizes viewing state data supplied from such devices. In more detail, each monitoring device provides the viewing state data obtained from a television receiver to the center at regular time intervals. The center accumulates the viewing state data provided from each monitoring devices and calculates an audience rating on the basis of the data.

In recent years, more and more people have their own television sets and the number of broadcast channels is increasing. Accordingly, advertisers want to broadcast commercials more effectively and television broadcast stations which want to produce programs that meet a wide variety of needs of audiences. Therefore, there is an increasing demand for the implementation of a system which surveys an attribute-specific audience rating (for example, an audience rating concerning twenty something males) beyond the household-specific audience rating.

To meet this demand, there is introduced an audience rating survey system employing a so-called "diary questionnaire scheme". With this scheme, each audience fills out a predetermined questionnaire according to his/her television viewing state, and a center calculates an attribute-specific audience rating by collecting and summarizing the questionnaires on a regular basis.

However, such a diary questionnaire scheme has various problems. For example, the delivery and filling-out of the questionnaires are cumbersome, thereby imposing inconvenience on audiences. In addition, the content of the questionnaires tends to be inaccurate since an audience fills out it by hand. Needless to say, it is difficult to calculate an audience rating quickly in such a scheme.

### DISCLOSURE OF THE INVENTION

The present invention has been made under those circumstances described above and is aimed at providing an audience rating calculating system and a mobile communication terminal, in order to calculate an attribute-specific audience rating accurately and quickly without imposing inconvenience on audiences.

A system according to the present invention comprises: a broadcast station which broadcasts a plurality of programs; a plurality of receivers each of which selectively receives and reproduces a program broadcasted from the broadcast station; a plurality of remote controllers each of which transmits a program selection signal representing a program selection request from a user to any one of the plurality of receivers; and an audience rating calculating server which calculates audience ratings of users.

Each of the remote controllers includes a means for storing audience identification information that uniquely specifies the user, and transmits the audience identification information after adding the audience identification information to the program selection signal in accordance with a program selection operation performed by the user.

Each of the receivers includes a means for storing program identification information uniquely specifying a program, selection of which is designated by the program selection signal, and the audience identification information.

Each of the receivers receives the program selection signal and the audience identification signal, and stores the program selection signal, the audience identification information, and a viewing time of the program as viewing history information in which the program selection signal, the audience identification information, and the viewing time are associated with each other.

The audience rating calculating server includes an audience attribute information storage means for storing the audience identification information and attribute information showing attributes of the audiences so that the audience identification information and the attribute information are associated with each other. The audience rating calculating server collects viewing history information stored in the plurality of receivers, and calculates an attribute-specific audience rating on the basis of the collected viewing history information and the attribute information of respective audiences stored in the audience attribute information storage means.

Each of the remote controllers may be a mobile communication terminal, such as a mobile telephone, which is accommodated in a mobile communication network. In this case, each remote controller may include a first wireless interface and a second wireless interface. The first wireless interface performs wireless communication with a base station of the mobile communication network and the second wireless interface transmits the program selection signal to any one of the plurality of receivers. If each of the receivers is network-connected to the mobile communication network, it is possible to transmit the program selection signal to any one of the receivers via the mobile communication network.

Needless to say, if the program selection signal contains a signal that designates recording of the program, it becomes possible to make a recording reservation.

Each of the receivers may receive the program via a network, in addition to by a broadcast radio wave. In this case, each of the receivers is network-connected to the broadcast station. In addition, if each of the receivers judges whether the received signal of program selection is inputted by a user who has been registered at the receiver, it is possible to prevent a situation where an unregistered user operates the receiver remotely.

The broadcast station is able to obtain the audience rating, which is calculated by the audience rating calculating server, as described above. Furthermore, it is also possible that each of the remote controllers as well as the broadcast stations obtain the audience rating.

### BRIEF DESCRIPTION OF THE DRAWINGS

FIG. 1 is a block diagram showing a configuration of an audience rating calculating system according to an embodiment of the present invention.
FIG. 2 is a block diagram showing a configuration of a broadcast management server of a broadcast station 40 constituting the audience rating calculating system according to the embodiment.
FIG. 3 shows data format stored in a program DB in the broadcast management server.
FIG. 4 shows data format stored in a broadcast timetable in the broadcast management server.
FIG. 5 is a block diagram showing a configuration of a set-top box constituting the audience rating calculating system according to the embodiment.
FIG. 6 shows data format stored in a mobile station ID storage unit in the set-top box.
FIG. 7 shows data format stored in a viewing history storage unit in the set-top box.
FIG. 8 is a block diagram showing a configuration of a mobile station constituting the audience rating calculating system according to the embodiment.
FIG. 9 shows a format of an infrared signal transmitted from the mobile station.
FIG. 10 shows a format of an infrared signal designating a channel selection which is transmitted from the mobile station.
FIG. 11 shows a format of an infrared signal designating a recording reservation which is transmitted from the mobile station.
FIG. 12 is an external view of a user interface of the mobile station.
FIG. 13 is a block diagram showing a configuration of an audience rating calculating server constituting the audience rating calculating system according to the embodiment.
FIG. 14 shows data format stored in a user attribute information storage unit of the audience rating calculating server.
FIG. 15 is a sequence diagram showing how the set-top box accumulates viewing histories in the embodiment.
FIG. 16 is a sequence diagram showing how the audience rating calculating server collects viewing histories in the embodiment.
FIG. 17 is also a sequence diagram showing how the audience rating calculating server collects viewing histories in the embodiment.
FIG. 18 is a sequence diagram showing how the audience rating calculating server generates and provides audience rating data in the embodiment.
FIG. 19 is a sequence diagram showing how an audience rating data generating unit generates audience rating data in the embodiment.
FIG. 20 shows an example of audience rating data outputted by the audience rating calculating server in the embodiment.

### BEST MODE FOR CARRYING OUT THE INVENTION

An embodiment of the present invention will be described below referring to the drawings.

### A: Configuration

### A-1: Entire Configuration of System

First, there will now be described an entire configuration of an audience rating calculating system according to the present embodiment.

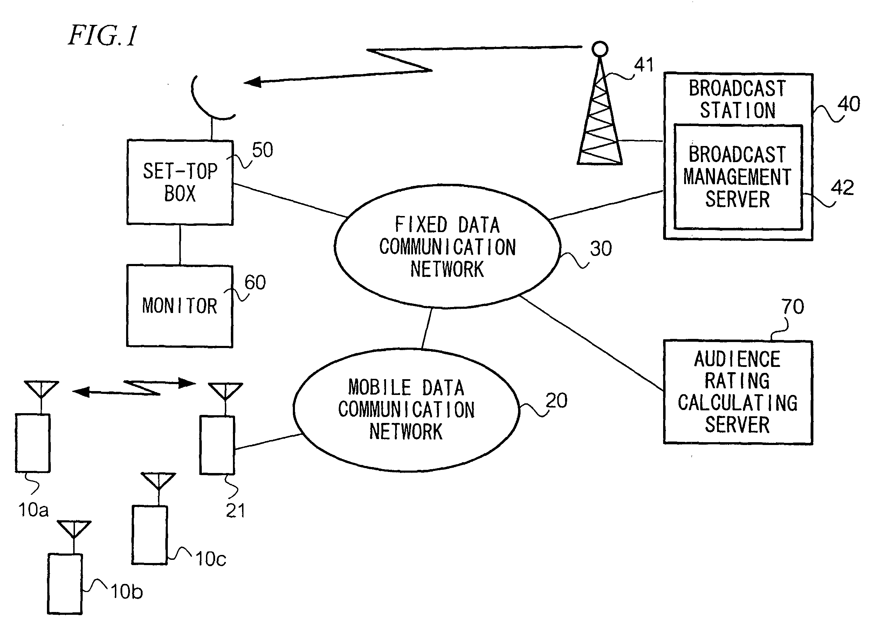

FIG. 1 is a block diagram showing the entire configuration of the audience rating calculating system. As shown in this drawing, this audience rating calculating system includes mobile stations 10a through 10c, a mobile data communication network 20, a fixed data communication network 30, a broadcast station 40, a set-top box 50, a monitor 60, and an audience rating calculating server 70.

Each of the mobile stations 10a through 10c is a mobile communication terminal, such as a mobile telephone, that is accommodated in a mobile telephone network (not shown) and the mobile data communication network 20. Each mobile station 10 has a function of wireless communication. In this system, each mobile station 10 ia able to obtain wireless communication service provided on the mobile telephone network and also perform wireless data communication via the mobile data communication network 20. In addition, each mobile station 10 has a function as a remote controller for the set-top box 50, so that a user can perform a remote control of the set-top box 50 using the mobile station 10.

The mobile data communication network 20 is composed mainly of a plurality of base stations 21, a switching center, which is not shown, communication lines connecting them. In this system, the mobile data communication network 20 provides each mobile station 10 with data communication service. Each base station 21 performs wireless communication with the mobile stations 10a through 10c within a wireless zone. The switching center accommodates a plurality of the base stations 21 and switches the communication lines.

The fixed data communication network 30 is a bi-directional digital communication network, such as ISDN (Integrated Services Digital Network). This fixed data communication network 20 accommodates a plurality of fixed stations including the broadcast station 40, the set-top box 50, and the audience rating calculating server 70, and provides data communication service between these fixed stations. The fixed data communication network 30 is also connected to the mobile data communication network 20 via a gateway (not shown). Having such a configuration, this system can effect data communication between the fixed stations accommodated in this network 30 and the mobile stations 10 accommodated in the mobile data communication network 20.

The broadcast station 40 provides terrestrial digital broadcasting of television programs via a broadcast wave transmitting antenna 41. The broadcast station 40 includes a broadcast management server 42 that performs processing for broadcasting television programs.

The set-top box 50 (hereinafter, the "STB" 50) is connected to a broadcast wave receiving antenna and receives, via this antenna, video data and audio data of a program (these data will be hereinafter simply referred to as the "program data") transmitted by the terrestrial digital broadcasting from the broadcast station 40. The STB 50 is also connected to the monitor 60, demodulates a received broadcast wave, and outputs the demodulated wave to the monitor 60. Finally, the demodulated wave is reproduced as video and audio. Further, the STB 50 stores information concerning the program outputted to the monitor 60 as a user's viewing history and supplies the stored viewing history to the audience rating calculating server 70 via the fixed data communication network 30.

The monitor 60 displays a television program represented by video and audio according to video and audio signal supplied from the STB 50. FIG. 1 shows only one STB 50 and monitor 60. In actuality, however, the system has a plurality of STBs and monitors each of which is installed in each household.

The audience rating calculating server 70 receives and stores viewing histories supplied from the plurality of STBs 50 via the fixed data communication network 30 and calculates audience ratings of television programs on the basis of the stored viewing histories.

### A-2: Configuration of Broadcast Management Server 42 of Broadcast Station 40

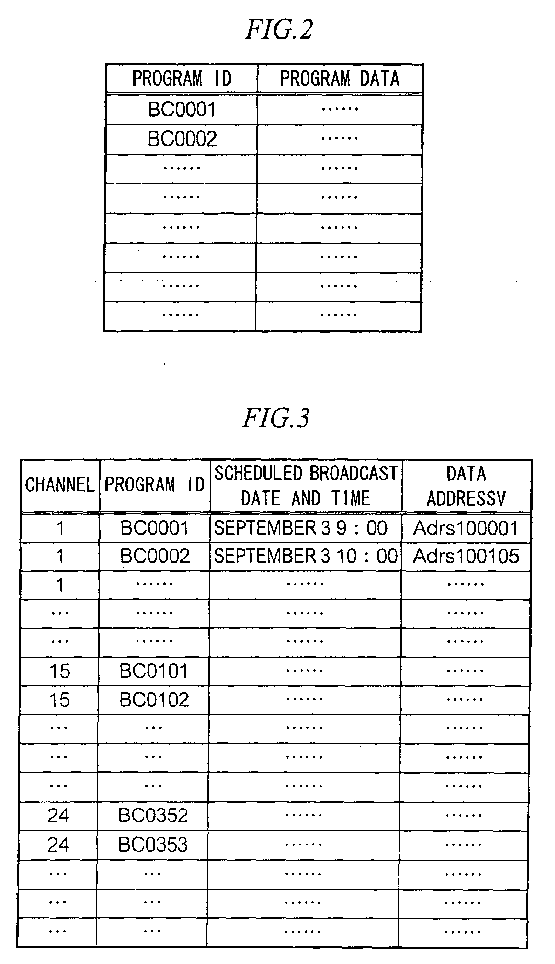

FIG. 2 is a block diagram showing a configuration of the broadcast management server 42. As shown, the broadcast management server 42 includes a broadcast control unit 421, a broadcast timetable 422, a program database 423, and a timer 424.

In the program database (hereinafter referred to as the "DB") 423, there is stored program data that should be provided to users. Schedule data representing broadcast date and time of each program data is stored in the broadcast timetable 422.

The broadcast control unit 421 is connected to the broadcast wave transmitting antenna 41 and controls terrestrial digital broadcasting via this antenna 41. In more detail, firstly, the broadcast control unit 421 reads out program data for broadcast from the program DB 423 by referring to the broadcast timetable 422. Next, the broadcast control unit 421 performs predetermined conversion processing on this program data to generate data with appropriate format for broadcast, and broadcasts the data via the broadcast wave transmitting antenna 41. In addition, the broadcast control unit 421 also broadcasts a time signal every hour referring to the timer 424.

FIG. 3 shows a format illustrating an example of data stored in the program DB 423. As shown, the program DB 423 stores program IDs and program data correspondingly. Each of the program IDs is identification information for uniquely specifying a program. The program data is stored after being compressed into a predetermined compression format.

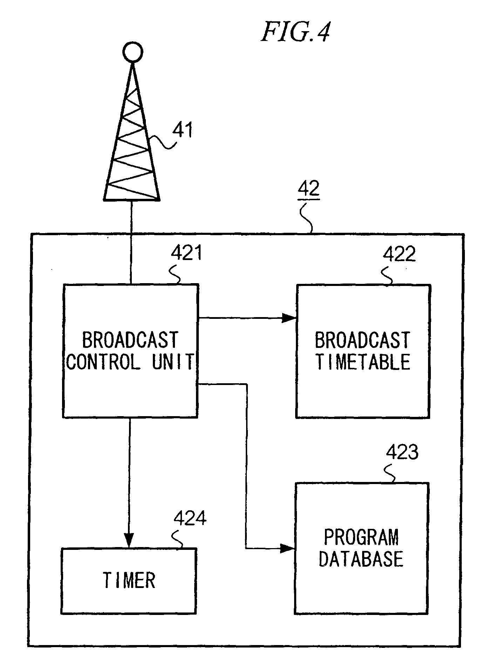

FIG. 4 shows a format illustrating an example of data stored in the broadcast timetable 422. As shown, the broadcast timetable 422 stores channel numbers on which programs are broadcasted, program IDs of the programs, scheduled broadcast dates and times, and program data addresses in the program DB 424, with these data item being associated with each other. For example, the data shown in the figure indicates that a program specified by a program ID "BC0001" will be broadcasted at "September 3, 9:00 a.m." on a broadcast channel "11" and the program data is stored at an address of "Adrs100001" in the program DB 424.

### A-3: Configuration of STB 50

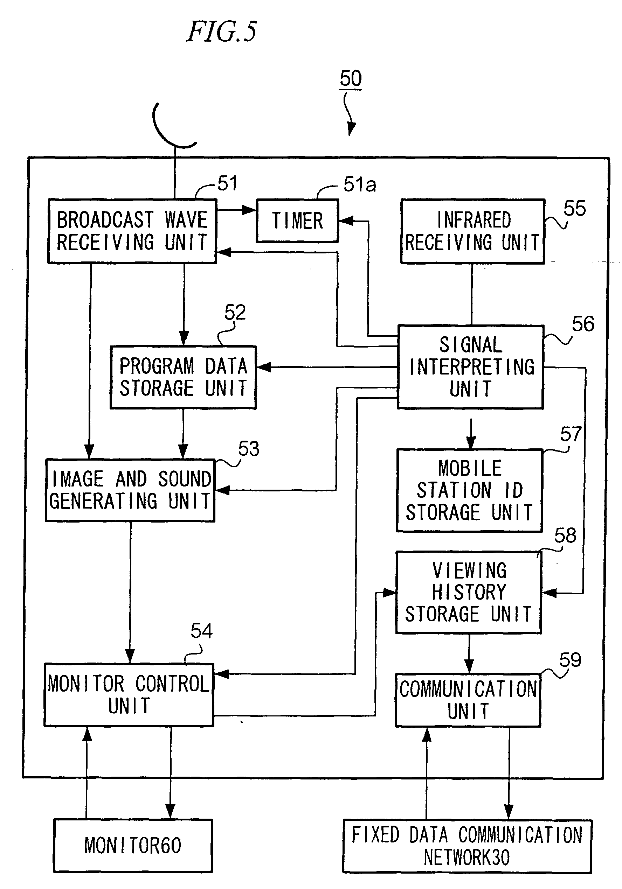

Next, a configuration of the STB 50 will now be described referring to FIG. 5.

FIG. 5 is a block diagram showing the configuration of the STB 50. As shown, the STB 50 has a broadcast wave receiving unit 51, a timer 51a, a program data storage unit 52, a image and sound generating unit53, a monitor control unit 54, an infrared receiving unit 55, a signal interpreting unit 56, a mobile station ID storage unit 57, a viewing history storage unit 58, and a communication unit 59.

The broadcast wave receiving unit 51 tunes to a broadcast wave channel selected by a user, receives a broadcast wave via the broadcast wave receiving antenna, and demodulates received wave. After the demodulation, received program data is supplied to either the program data storage unit 52 or the image and sound generating unit53. In addition, the broadcast wave receiving unit 51 receives a time signal broadcasted from the broadcast station 40 together with a program data and adjusts the timer 51a referring to the time signal. The timer 51a is referenced when viewing histories is stored. Details will be described later.

The program data storage unit 52 is a large-capacity storage device, such as a hard drive, which stores program data supplied from the broadcast wave receiving unit 51. The stored program data is read out responsive to a request from a user and then supplied to the image and sound generating unit53.

The image and sound generating unit53 generates digital video and audio signals by decoding compressed program data supplied from either the broadcast wave receiving unit 51 or the program data storage unit 52, to supply the generated signals to the monitor control unit 54.

The monitor control unit 54 controls the monitor 60 according to operations performed by a user. In addition, the monitor control unit 54 converts the digital video and audio signals supplied by the image and sound generating unit53 into analog signals that are reproducible in the monitor 60, to output the analog signals to the monitor 60.

The infrared receiving unit 55 receives infrared signals transmitted from the mobile stations 10, each of which functions as a remote controller for the STB 50 and supplies the received infrared signals to the signal interpreting unit 56. Each of these infrared signals is a control signal for controlling the STB 50 and contains a user's request for a channel selection, a recording reservation, volume control, and other instructions.

The signal interpreting unit 56 interprets instructions included in an infrared signal supplied from the infrared receiving unit 55 and supplies the request to units of the broadcast wave receiving unit 51, the image and sound generating unit53, and the monitor control unit 54 on the basis of the interpretation.

The mobile station ID storage unit 57 stores mobile station IDs of the mobile stations 10a through 10c that are allowed to remotely control this STB 50. The mobile station ID is an identification information for uniquely specify one of the mobile stations 10a through 10c in networks (the mobile data communication network 20 and the fixed data communication network 30).

The viewing history storage unit 58 stores viewing histories, which are supplied to the communication unit 59 for transmission to the audience rating calculating server 70 on a regular basis.

The communication unit 59 is an interface for communication with the fixed data communication network 30. In case the fixed data communication network 30 is ISDN, the communication unit 59 includes a DSU (digital service unit) or a TA (terminal adapter). For an example, the communication unit 59 transmits the viewing histories, which are supplied from the viewing history storage unit 58, to the audience rating calculating server 70 via the fixed data communication network 30.

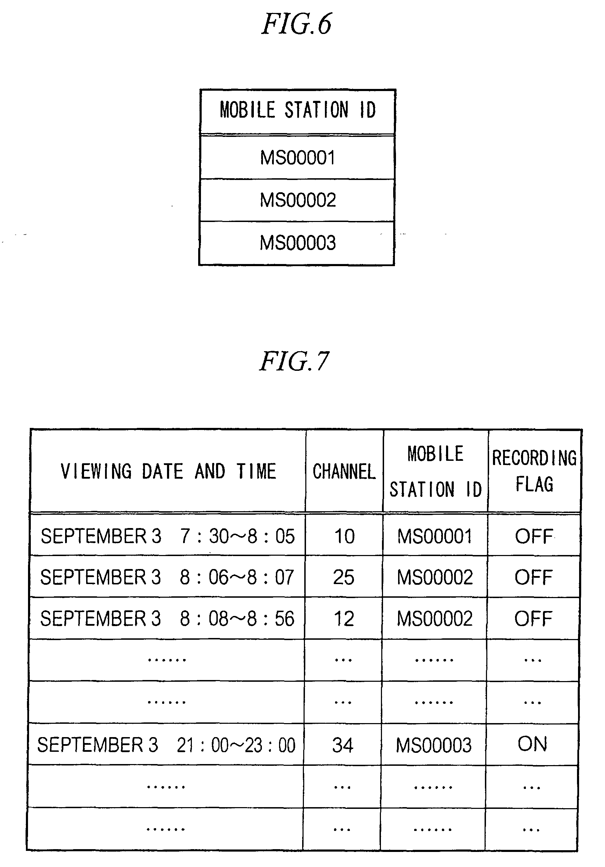

FIG. 6 shows a format illustrating an example of data stored in the mobile station ID storage unit 57. As shown, there are stored "mobile station IDs" (that is, "MS0001", "MS0002", and "MS0003") of the mobile stations 10a through 10c each of which is capable of remotely controlling the STB 50. Each of the mobile station IDs is, for example, assigned to each mobile station 10 owned by respective family members of a household in which the STB 50 is installed. These mobile station ID is registered to the STB 50 in advance in a way that a user inputs the ID by operating the mobile station.

As will be described later, the infrared signal transmitted from each mobile station 10 to the STB 50 includes the mobile station ID of the mobile station 10. Only if the mobile station ID included in the infrared signal is stored in this mobile station ID storage unit 57, the signal interpreting unit 56 judges that requests indicated by the infrared signal are valid.

FIG. 7 shows a format illustrating an example of data stored in the viewing history storage unit 58. As shown, there are stored viewing dates and times, channels, mobile station IDs, and recording flags, with these information being associated with each other. For example, the data shown in this drawing indicates that a user of the mobile station 10a specified by the mobile station ID "MS00001" started viewing a television program broadcasted on Channel "10" at "September 3, 7:30 a.m." and finished viewing at "the same day, 8:05 a.m.". The viewing start and end time of date are stored referring to the timer 51a. The viewing date and time and a channel number is necessary for the audience calculating server to specify the program viewed by the user. Next, the recording flag is set at "ON" if the program was recorded. If not recorded, which means that the program was viewed in real time, the recording flag is set at "OFF". In case that a user records the program while viewing the program in real time, the recording flag is set at "OFF".

The viewing history storage unit 58 stores, pursuant to the format described above, viewing history for a day, which is obtained from 0:00 a.m. on the day to 0:00 a.m. on the next day. Following this, when the current time reaches 0:00 a.m., the viewing history storage unit 58 transmits the stored viewing history to the audience rating calculating server 70 via the communication unit 59. After the transmission is completed, the viewing history storage unit 58 deletes the viewing history for today and starts again the storing viewing history for the next day.

How viewing histories are stored into the viewing history storage unit 58 will now be described.

First, when a user operates to select a channel using the mobile station 10, the signal interpreting unit 56 stores, into the viewing history storage unit 58, a time when the selection is done (that is, a viewing start time) by referring to the timer 51a. Following this, when the user operates to select another channel, the signal interpreting unit 56 stores, into the viewing history storage unit 58, a time when the channel is switched (that is, a viewing end time). In addition, the signal interpreting unit 56 stores a viewing start time, a channel number, and a mobile station ID included in a viewing history about the newly selected channel. In this way, a viewing history is stored each time when a user selects a channel.

### A-4: Configuration of Mobile Stations 10a through 10c

Each of the mobile stations 10a through 10c has the same configuration. Thus, in this embodiment, the mobile station 10a will be described as an example.

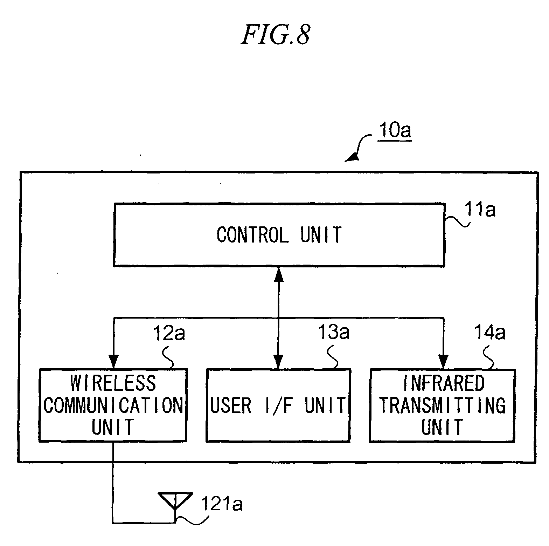

FIG. 8 is a block diagram showing a configuration of the mobile station 10a. As shown, this mobile station 10a includes a control unit 11a, a wireless communication unit 12a, a user interface unit 13a (the term "interface" will be hereinafter referred to as the "I/F"), and an infrared transmitting unit 14a.

The control unit 11a is composed mainly of a CPU (central processing unit), a memory, and controls units in this mobile station 10a. The memory in the control unit 11a stores the mobile station ID and various control programs. The control programs include a control program for remotely operating the STB 50 as well as a control program for providing a user with voice and data communication service.

Next, the wireless communication unit 12a carries out wireless communications with a base station in a mobile telephone network (not shown) and the base station 21 of the mobile data communication network 20 via an antenna 121a. For example, the wireless communication unit 12a transmits a recording reservation request signal representing a reservation for recording a television program to the STB 50 via the mobile data communication network 20 and the fixed data communication network 30.

The user I/F unit 13a is mainly composed of a liquid crystal display for displaying information, a keypad with which a user inputs instructions, a microphone and a speaker with which the user makes a call. By operating this keypad, the user performs a remote control of the STB 50 as well as a wireless call and wireless data communication.

The infrared transmitting unit 14a transmits, to the STB 50, an infrared signal indicating a remote control designation, which is inputted by the user with the keypad.

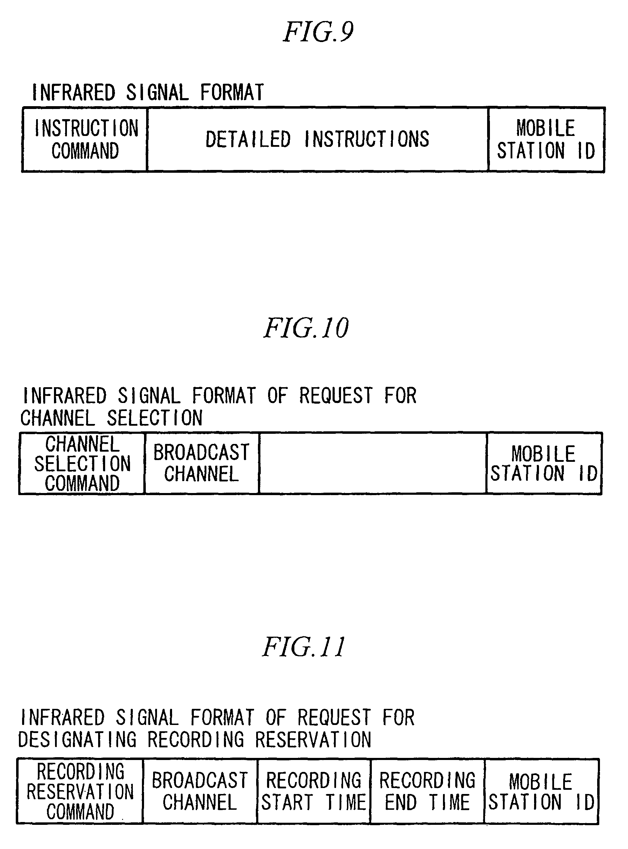

FIG. 9 shows a format of the infrared signal transmitted from the infrared transmitting unit 14a. In the drawing, the infrared signal has a configuration arranged in the following order, an instruction command designating an operation, detailed instruction showing a request of a user, and the mobile station ID of the mobile station 10 for specifying from which the infrared signal is transmitted, from the top.

As an example, of the signal with this format, a signal indicating a request for remote control will now be described. FIG. 10 shows a format of an infrared signal representing a request for channel selection. As shown, this signal is arranged in the following order such as, a channel selection command as the instruction command, a broadcast channel as the detailed instruction, a mobile station ID, from the top to the end. FIG. 11 shows a format of an infrared signal representing a request for a reservation of recording. As shown in this drawing, a recording reservation command is put top as the instruction command and a broadcast channel, a recording start time, a recording end time follow as the detailed instructions, and a mobile station ID is put in the tail.

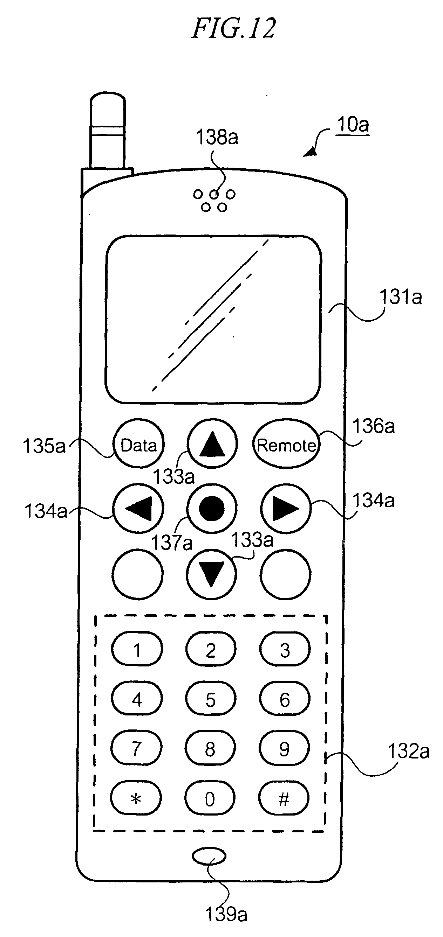

FIG. 12 is an external view of the user I/F unit 13a of the mobile station 10a. The mobile staticn 10a has a call mode for carrying out voice communications, a data communication mode for carrying out data communication, and a remote control mode in which the mobile station 10a functions as a remote controller for the STB 50. The mobile station 10a is set to the call mode at the default. Reference symbol 135a denotes a data communication mode key. If a user depresses this key, the mobile station 10a is switched to the data communication mode. Reference symbol 136a represents a remote control mode key. If a user depresses this key, the mobile station 10a is switched to the remote control mode. The following keys are used in the remote control mode. Reference symbol 134a denotes channel switching keys to switch broadcast channels one by one and reference symbol 133a represents volume control keys control the volume. Keys 132a constitute a ten-key pad to input instructions such as a request for a reservation of recording or a broadcast channel manually. Reference symbol 137a represents a determination key to confirm the entry. Reference symbols 138a and 139a denote a speaker and a microphone, respectively.

### A-5: Configuration of Audience Rating Calculating Server 70

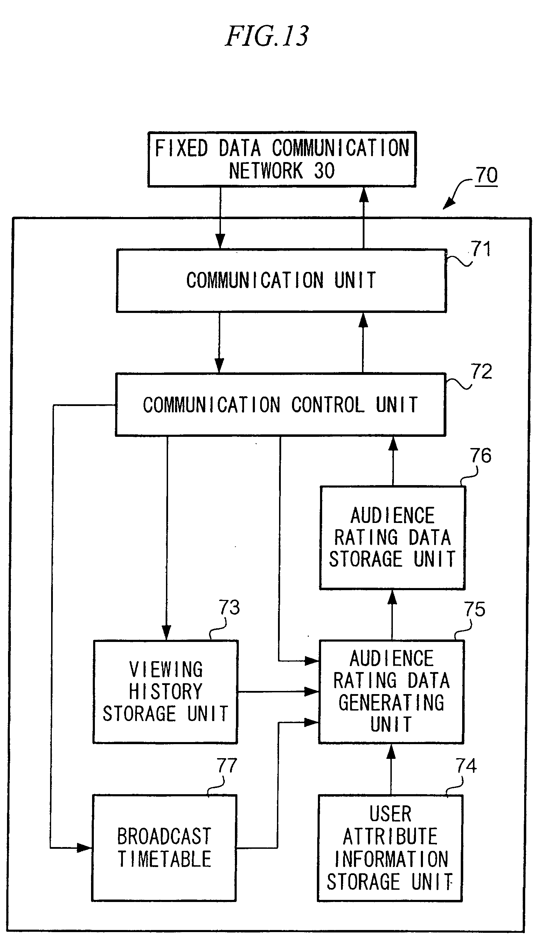

FIG. 13 is a block diagram showing a configuration of the audience rating server 70. As shown, the audience rating calculating server 70 includes a communication unit 71, a communication control unit 72, a viewing history storage unit 73, a user attribute information storage unit 74, an audience rating calculating unit 75, an audience rating data storage unit 76, and a broadcast timetable 77.

The communication unit 71 is connected to the fixed data communication network 30 and performs data communications via the network 30. The communication control unit 72 controls the communication unit 71.

The viewing history storage unit 73 stores viewing histories transmitted from the STB 50 via the fixed data communication network 30.

The user attribute information storage unit 74 stores attribute information of users mobile stations 10.

The broadcast timetable 77 stores data of scheduled broadcast dates and times, which is supplied from the broadcast station. In other words, the broadcast timetable 77 stores the same data stored in the broadcast timetable 422 of the broadcast station 40.

The audience rating data generating unit 75 generates attribute-specific audience rating data by referring to the viewing history storage unit 73, the broadcast timetable 77, and the user attribute information storage unit 74. The generated audience rating data is supplied to the audience rating data storage unit 76.

The audience rating data storage unit 76 stores the audience rating data supplied from the audience rating data generating unit 75. The stored audience rating data is read out by the communication control unit 72 and is transmitted to the broadcast station 40 via the fixed data communication network 30.

Data stored in the user attribute information storage unit 74 will now be described.

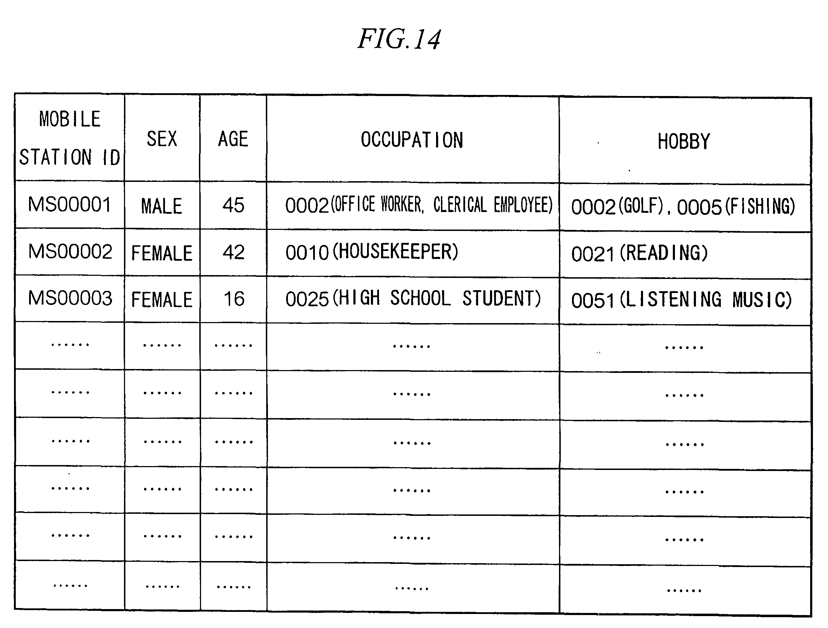

FIG. 14 shows a format of data stored in the attribute information storage unit 74. As shown, mobile station IDs, genders of users of the mobile stations 10, their ages, their occupation, and their hobby, with these information being associated with each other. Each occupation is represented by a code number assigned in advance by a corporation which runs the audience rating calculating system. Similarly, the hobbies are represented by code numbers. These pieces of information are inputted into the audience rating calculating server 70 according to provides made by users.

### B: Operation

Operations of the system based on the present embodiment having the configuration described above will now be described.

In this embodiment, first, the STB 50 accumulates viewing histories of users. Then, the audience rating calculating server 70 collects the viewing histories from the STB 50. Finally, the audience rating calculating server 70 generates audience rating data on the basis of the collected viewing histories and sends the audience rating data to the broadcast station 40. Explanations of these operations will be given one by one.

### B-1: Accumulation of Viewing History by STB 50

In this embodiment, the viewing histories can be classified into viewing histories concerning real-time viewing and concerning video recording.

### (1) Accumulation of Viewing History Concerning Real-Time Viewing

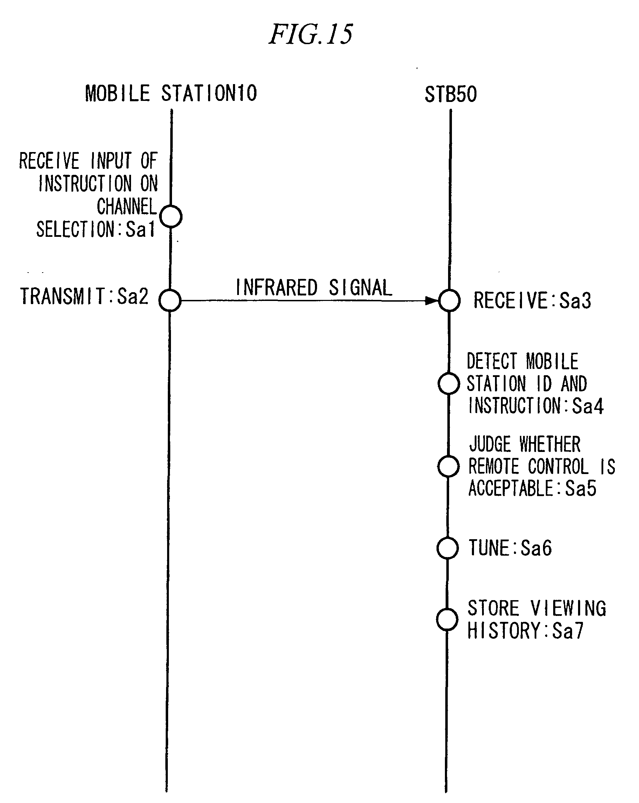

The operation for accumulating viewing histories concerning real-time viewing will be described referring to a sequence diagram shown in FIG. 15.

First, when a user inputs an instruction of a channel selection into his/her mobile station 10, the mobile station 10 receives the input (step Sa1). Specifically, when the user depresses the remote control mode key 136, the mobile station 10 is set to the remote control mode. Following this, when the user inputs a broadcast channel using the ten-key pad and depresses the determination key 137, the mobile station 10 interprets this input as a request for channel selection. Next, the mobile station 10 generates an infrared signal representing a request for channel selection inputted by the user and transmits this signal to the STB 50 (step Sa2). This infrared signal has the format shown in FIG. 10, which includes a channel selection command, a broadcast channel, and a mobile station ID.

STB 50 receives the infrared signal sent from the mobile station 10 (step Sa3) and detects the channel selection command, the broadcast channel, and the mobile station ID in the infrared signal (step Sa4). Next, the STB 50 checks the detected mobile station ID by referring to the mobile station ID storage unit 57, to judge whether the operation was performed by a user who is registered to control the STB50 (step Sa5).

If it is judged that the instruction was given by a registered user, the STB 50 is tuned to the detected broadcast channel, interprets received broadcast wave, and outputs the program to the monitor 60 (step Sa6). If the instruction was given by an unregistered user, the STB 50 make the monitor 60 display a message indicating that the channel selection request is not acceptable.

Next, the STB 50 proceeds to process for storing viewing histories (step Sa7). Specifically, as shown in FIG. 7, the STB 50 stores a channel selection start date and time, a broadcast channel, and a mobile station ID correspondingly. The STB 50 then waits for the user to give the next channel selection. When the user selects another channel, the STB 50 stores an end date and time concerning the channel previously selected.

### (2) Accumulation of Viewing History Concerning Video Recording

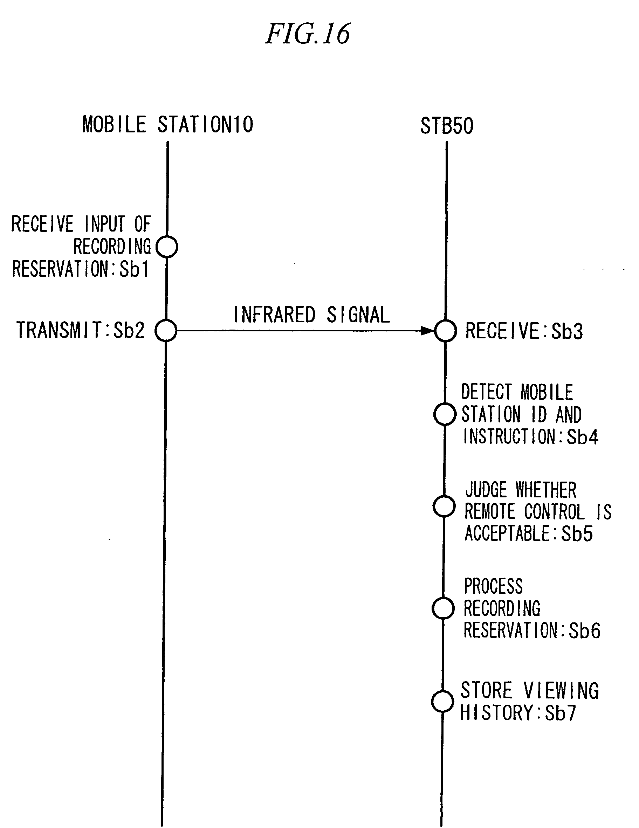

Operation for accumulating viewing histories concerning video recording will now be described referring to a sequence diagram shown in FIG. 16. As shown, firstly, a user inputs a request for a video recording reservation into his/her mobile station 10 and the mobile station 10 receives this input (step Sb1). Specifically, after the remote control mode key 136 is depressed to set the mobile station 10 to the remote control mode, the user inputs a broadcast start time, a broadcast end time, and a broadcast channel of a program for recording. Following this, if the determination key 137 is depressed, the mobile station 10 interprets these inputs as a request for video recording reservation. Next, the mobile station 10 generates an infrared signal representing the request for video recording reservation and transmits the signal to the STB 50 (step Sb2). As shown in FIG. 11, this infrared signal includes a recording reservation command, a broadcast channel, a recording start and a recording end time, and a mobile station ID.

The STB 50 receives the infrared signal transmitted by the mobile station 10 (step Sb3) and extracts the recording reservation command, the broadcast channel, the recording start time and the recording end time, and the mobile station ID contained in this infrared signal (step Sb4). Next, the STB 50 checks the extracted mobile station ID referring to the mobile station ID storage unit 57 and judges whether this instruction was given by a registered user (step Sb5).

If it is judged that the instruction is given by a registered user, the STB 50 makes a recording reservation indicated by the extracted instruction. In more detail, the STB 50 instructs the broadcast wave receiving unit 51 and the program data storage unit 52 to make a recording reservation (step Sb6). If the instruction is given by an unregistered user, the STB 50 makes the monitor 60 display a message indicating that the request for recording reservation is rejected.

Then, when the time comes to the recording start time, the STB 50 starts recording and storing a viewing history (step Sb7). That is, a viewing start date and time, a broadcast channel, and a mobile station ID are stored correspondingly in the viewing history storage unit 58. When the time comes to the recording end time, a viewing end date and time is stored in the viewing history storage unit 58.

### B-2: Viewing History Collection by Audience Rating Calculating Server 70

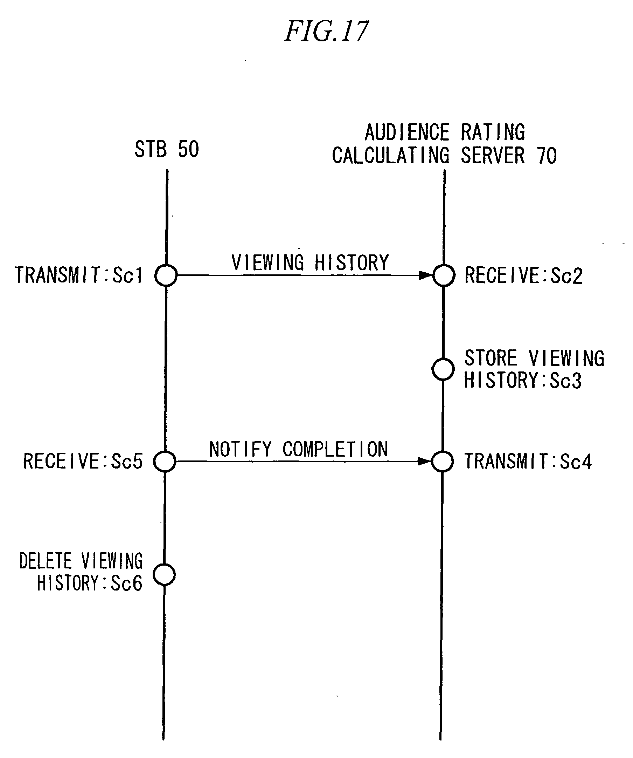

How the audience rating calculating server 70 collects viewing histories from each STB 50 will now be described referring to a sequence diagram shown in FIG. 17. In this drawing, each STB 50 refers to the timer 51a. When the time comes to a time for transmission of viewing histories, the STB 50 transmits viewing histories stored in the viewing history storage unit 58 to the audience rating calculating server 70 (step Sc1).

The audience rating calculating server 70 receives the viewing histories transmitted from the STB 50 (step Sc2) and stores the received viewing histories in the viewing history storage unit 73 (step Sc3). After storing viewing histories is completed, the audience rating calculating server 70 transmits, to the STB 50, a completion notification showing that the viewing history storage processing is completed (step Sc4). The STB 50 receives this completion notification transmitted from the audience rating calculating server 70 (step Sc5) and deletes the viewing histories stored in the viewing history storage unit 58. The audience rating calculating server 70 performs this operation for all the STBs 50.

### B-3: Generation and Provision of Audience Rating Data by Audience Rating Calculating Server 70

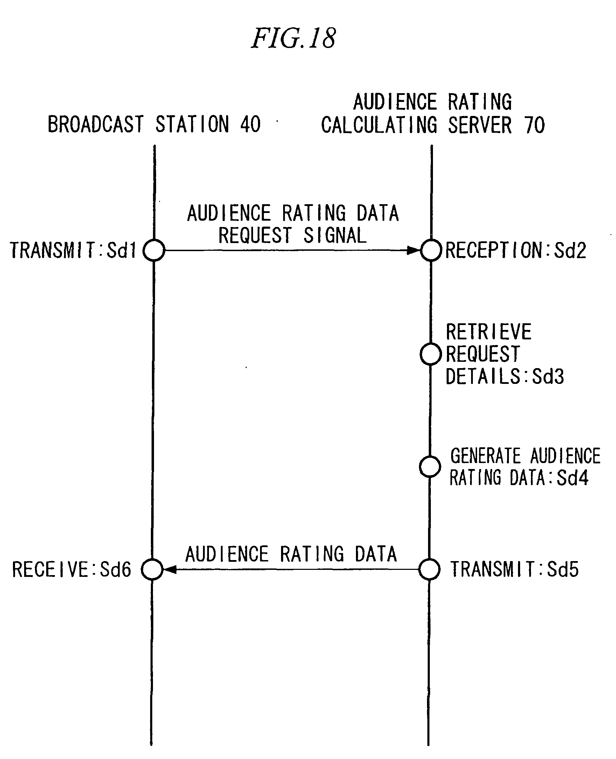

Next, how audience rating data is generated and provided by the audience rating calculating server 70 will now be described with reference to a sequence diagram shown in FIG. 18. As shown, firstly, the broadcast station 40 transmits an audience rating data request signal indicating a request for audience rating data, to the audience rating calculating server 70 (step Sd1). This request signal includes a program ID of a television program subjected to a survey and user attribute information necessary for generation of audience rating data.

The audience rating calculating server 70 receives the request signal (step Sd2) and extracts the program ID and the user attribute information from the received request signal (step Sd3). Next, the audience rating calculating server 70 retrieves viewing histories from the viewing history storage unit 73 on the basis of the detected user attribute information to generates audience rating data (step Sd4). Following this, the audience rating calculating server 70 transmits the generated audience rating data to the broadcast station 40 (step Sd5). The broadcast station 40 receives the audience rating data transmitted from the audience rating calculating server 70 and returns a confirmation signal to the audience rating calculating server 70.

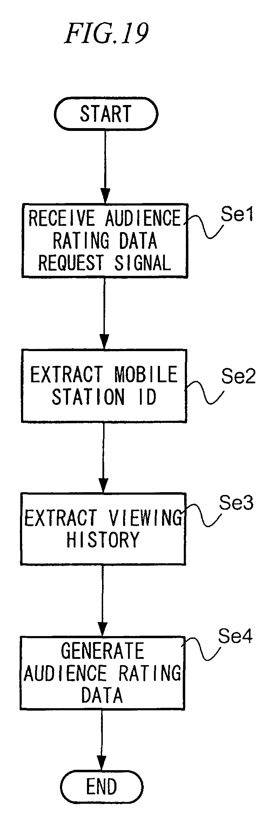

The specific processing performed in the step Sd4 for generation of the audience rating data will now be described referring to FIG. 19. FIG. 19 is a flowchart showing how the audience rating data generating unit 75 generates the audience rating data. As shown, first, the audience rating data generating unit 75 obtains user attribute information and the program ID of a program which is subjected to a survey, via the communication control unit 72 (step Se1). As an example, it is assumed that the program ID is "BC0001" and a condition for the user attribute is "twentysomething males".

Next, the audience rating data generating unit 75 retrieves mobile station IDs which coincides with the condition "twentysomething males" from the user attribute information storage unit 74 (step Se2). Specifically, mobile station IDs, in each of which the user's age and gender is twentysomething and male, respectively, are retrieved from the attribute information storage unit 74 shown in FIG. 14.

Next, the audience rating data generating unit 75 accesses to the broadcast timetable 77 to retrieve viewing histories corresponding to the obtained program ID and the extracted mobile station IDs from the viewing history storage unit 73 (step Se3). Specifically, the audience rating data generating unit 75 obtains a broadcast time "September 3, 9:00 a.m. to 10:00 a.m." corresponding to the program ID "BC0001" from the broadcast timetable 77, and extracts, from the viewing history storage unit 73, viewing histories of the users of the extracted mobile station IDs within the air time.

Then, the audience rating data generating unit 75 generates audience rating data on the basis of the extracted viewing histories (step Se4). In more detail, The audience rating data generating unit 75 counts the number of the retrieved mobile station IDs, which means that is the number of users who viewed the program, for each minute during the air time. The counted number is divided by the total number of users and multiplied by 100, to obtain the audience rating. In addition, the maximum value, the minimum value, and the average value during the airtime.

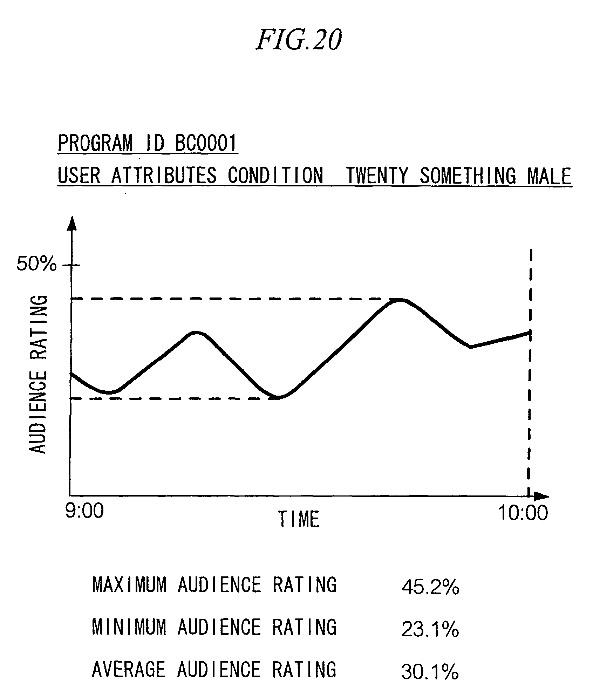

An example of the audience rating data obtained in this way is shown in FIG. 20 by a line graph representing the audience rating at every minute. In this figure the maximum, the minimum, and the average audience rating are obtained.

It should be noted that the condition of user attribute can be set according to the purpose of a survey of the audience rating. Specifically, it is also possible to make a more detailed setting. The condition for user attribute may be set to obtain an audience rating concerning, for example, thirty-to-fiftysomethings male office workers whose hobby is golf. Furthermore, it is possible to separately calculate audience rating data concerning real-time viewing and audience rating data concerning recording by referring to the on/off state of each recording flag in the viewing history storage unit 73.

As described above, in the system based on the present embodiment, viewing history about a user is obtained merely by user's operations of the STB 50 using the mobile stations 10 carried by them. Therefore, a user's attribute-specific audience rating can be calculated accurately and quickly, without inconvenience of users.

### C: Modification

Although an embodiment of the present invention has been described above, the present invention is not limited to the above embodiment and is construed to various modifications described below.

### C-1: Form of Fixed Data Communication Network 30 and Broadcast

The fixed data communication network 30 may be replaced with a communication network other than ISDN described in the above embodiment as an example. For example, the Internet, a public telephone network, or other suitable network may be used instead. As described above, the terrestrial digital broadcasting is used as a broadcast form. However, the present invention is not limited to the terrestrial broadcasting. For example, wired broadcasting such as a CATV (community antenna television system) or digital satellite broadcasting, such as BS (broadcasting satellite) broadcasting or CS (communication satellite) broadcasting may be used.

### C-2: Form of STB 50

In the above embodiment, the case where the STB 50 is connected to the fixed data communication network 30 has been described as an example. However, the present invention is not limited to this. The STB 50 may be accommodated in the mobile data communication network 20 or a mobile data communication network other than this mobile data communication network 20 which is connected with the mobile data communication network 20 for data communication. In this case, for example, the STB 50 may include a wireless interface for communication with the mobile data communication network 20, as do the mobile stations 10. Alternatively, the STB 50 may include a data communication interface for connection with the mobile stations 10.

### C-3: Form of Mobile Station 10

In the above embodiment, the case where each of the mobile stations has the function of voice communication such as a mobile telephone has been described as an example. However, the present invention is not limited to this and each mobile station may be a portable information terminal such as a PHS (personal handy phone system), which is used exclusively for data communication or a PDA (personal digital assistants) having the function of wireless data communication.

### C-4: Form of Remote Control of STB 50 by Mobile Station 10

In the above embodiment, though the communication between the mobile stations 10 and the STB 50 is carried out with infrared rays (by radio), the present invention is not limited to this. For example, the mobile stations 10 may control the STB 50 by sending signals via the mobile data communication network 20 and the fixed data communication network 30. Specifically, each of the mobile stations 10 first receives from a user an input of a request for remote control. The mobile station 10 is then switched to the data communication mode and transmits the request for remote control to the STB 50 via the mobile data communication network 20 and the fixed data communication network 30. On the other hand, he main power supply of the STB 50 is turned on at all times, to be ready to receive inputs of data from the fixed data communication network 30 at all times. When receiving the request for remote control transmitted from the mobile station 10, the STB 50 performs operations according to the received request. It is convenient for a user especially to reserve recording of a program.

### C-5: Requester for Audience Rating Data

In the above embodiment, a request for audience rating data is issued from the broadcast station 40 to the audience rating calculating server 70. However, the present invention is not limited to this.

For example, it is possible that each mobile station 10 issues a request for the audience rating data. In this case, the mobile station 10 transmits, to the audience rating calculating server 70, an audience rating data request signal including the mobile station ID, and the broadcast date and time and broadcast channel of a television program about which audience rating data is desired. The audience rating calculating server 70 receives a signal representing a request for the audience rating data via the mobile data communication network 20 and the fixed data communication network 30, and generates audience rating data responsive to the request. Specifically, the audience rating calculating server 70 generates audience rating data corresponding to the capacity of the memory of the mobile station 10 and the resolutionof the liquid crystal display. In general, the mobile station 10 has only a small-capacity memory and a low-resolution display, thus it is often the case that displaying a line graph such as shown in FIG. 20 is difficult. In such a case, the audience rating calculating server 70 supplies the mobile station 10 with only the maximum audience rating, the minimum audience rating, and the average audience rating of a program.

Furthermore, the audience rating calculating server 70 may spontaneously transmits the audience rating data to the broadcast station 40 without waiting for a signal representing a request for audience rating from the broadcast station 40. The audience rating data for transmission may be generated according to user's attributes that are classified by, for example, "all users", "teenage male", "teenage females", ..., "seventysomething females", and "others". By doing this, the broadcast station 40 is able to obtain audience rating data of users having specific attributes without issuing a request.

It is possible that the broadcast station 40 notifies, in advance, the audience rating calculating server 70 of what user base is targeted by the broadcast station 40. In this case, the audience rating calculating server 70 regularly generates audience rating data according to the notification, to transmit to the broadcast station 40.

### C-6: Form of Remote control of STB 50 by Mobile Station 10

In the above embodiment, only mobile stations 10 having mobile station IDs which is stored in the STB 50 in advance function as the remote controllers for the STB 50. However, the remote controller for the STB 50 is not limited to specific mobile stations 10. That is, all mobile stations 10 may function as the remote controllers for the STB 50. In more detail, the STB 50 does not judge permission for the remote control in step Sa5 shown in FIG. 15. In this case, for example, even if the user of the mobile station 10a visits someone's home and views a television program using the mobile station 10a as a remote controller at the home, the viewing history of the user is stored in the STB 50 of the home. Therefore, an audience rating is calculated more precisely.

### C-7: Form of Broadcasted Information

In the above embodiment, although the program data broadcasted from the broadcast station is program data of television programs, the present invention is not limited to this. For example, program of radio programs, videos, music, and other program data may be broadcasted.

## Claims

1. An audience rating calculating system comprising:
a broadcast station for broadcasting a plurality of programs;
a plurality of receivers each of which selectively receives and reproduces a program broadcasted from the broadcast station;
a plurality of remote controllers each of which transmits a program selection signal representing a program selection request from a user to any one of the plurality of receivers; and
an audience rating calculating server for calculating audience ratings of users, wherein:
each of the remote controllers includes a means for storing audience identification information which uniquely specifies the user, and transmits the audience identification information after adding the audience identification information to the program selection signal, according to a program selection operation performed by the user;
each of the receivers includes a storage means, receives from the broadcast station the program selection signal, the audience identification information, and a program which is designated by the program selection signal, and stores in the storage unit program identification information for uniquely specifying the received program, the audience identification information, and a viewing time of the program correspondingly, as viewing history information; and
the audience rating calculating server includes an audience attribute information storage means for storing the audience identification information and attribute information representing attributes of the audiences correspondingly, collects viewing history information stored in the plurality of receivers, and calculates an attribute-specific audience rating on the basis of the collected viewing history information and the attribute information stored in the audience attribute information storage means.

2. An audience rating calculating system according to claim 1, wherein each of the remote controllers is a mobile communication terminal which is accommodated in a mobile communication network, and includes a first wireless interface for performing wireless communication with a base station in the mobile communication network and a second wireless interface for transmitting the program selection signal to any one of the plurality of receivers.

3. An audience rating calculating system according to claim 2, wherein each of the mobile communication terminals is a mobile telephone that performs conversation in a wireless manner.

4. An audience rating calculating system according to claim 2, wherein each of the receivers is network-connected to the mobile communication network; and
the first wireless interface transmits the program selection signal to any one of the plurality of receivers via the mobile communication network.

5. An audience rating calculating system according to claim 1, wherein the program selection signal includes data representing a request for recording of the program.

6. An audience rating calculating system according to claim 1, wherein the program is supplied to each of the receivers by a broadcast radio wave.

7. An audience rating calculating system according to claim 1, wherein each of the receivers is connected to the broadcast station via a network, and the program is supplied to each of the receivers via the network.

8. An audience rating calculating system according to claim 1, wherein each of the receivers stores audience identification information of audiences who are registered to receive information of the program from the receiver, and includes a judging means for judging whether a request specified by the program selection signal is valid by comparing the audience identification information contained in the received program selection signal with the audience identification information of the audiences who are registered to receive the program information.

9. An audience rating calculating system according to claim 1, wherein the broadcast station includes a means for obtaining the audience rating calculated by the audience rating calculating server.

10. An audience rating calculating system according to claim 1, wherein the remote controller obtains the audience rating calculated by the audience rating calculating server.

11. A mobile communication terminal comprising:
a memory for storing identification information for uniquely specifying a user of the mobile communication terminal;
a first wireless interface; and
a second wireless interface, wherein the first wireless interface performs wireless communication with a base station of on mobile communication network; and
the second wireless interface adds the identification information to a program selection signal representing a program selection request from the user, and transmits the program selection signal containing the identification information to a receiver which selectively receives and reproduces a program broadcasted from a broadcast station according to a selection operation performed by the user.

12. A mobile communication terminal according to claim 11, wherein the mobile communication terminal is a mobile telephone which carries out voice communications by radio.

13. A mobile communication terminal according to claim 11, wherein the receiver is connected to the mobile communication network, and
the first wireless interface transmits the program selection signal to the receiver via the mobile communication network.

14. A mobile communication terminal according to claim 11, the program selection signal contains data representing a request for recording of the program.

15. A receiver which selectively receives and reproduces a program broadcasted from a broadcast station, has a storage unit, receives a program selection signal representing a program selection request from a user, audience identification information for uniquely identifying the user which is sent from a remote controller, and a program designated by the program selection signal from the broadcast station, and stores program identification information for uniquely identifying the received program, the audience identification information, and a viewing time of the program correspondingly in the storage unit as viewing history information.

16. A receiver according to claim 15, further stores audience identification information of audiences who are registered to receive information of the program from the receiver and has a judging means for judging whether a designation specified by the program selection signal is valid by comparing the audience identification information included in the received program selection signal with the audience identification information showing the audiences who are registered to receive the program information.

17. An audience rating calculating server comprising an audience attribute information storage means for storing audience identification information uniquely identifying users and attribute information indicating attributes of the audiences correspondingly, which collects viewing history information stored in each of the receivers for selectively receiving and reproducing a program broadcasted from a broadcast station and calculates an attribute-specific audience rating on the basis of the collected viewing history information and the attribute information stored in the audience attribute information storage means.
